# EUROPEAN PATENT APPLICATION

(11) **EP 3 128 406 A1**
(43) Date of publication of application: **08.02.2017**
(21) Application number: 16180732.6
(22) Date of filing: 22.07.2016
(51) Int. Cl.: G06F 3/048

(54) **MOBILE TERMINAL AND METHOD FOR CONTROLLING THE SAME**

(30) Priority: 03.08.2015 KR 20150109583
(71) Applicant: LG ELECTRONICS INC., Yeongdeungpo-gu Seoul 07336 (KR)
(72) Inventor: Eim, Sanghyun, 06772 Seoul (KR); Ham, Jihye, 06772 Seoul (KR)
(74) Representative: Ter Meer Steinmeister & Partner

(57) **Abstract**

The present invention relates to a mobile terminal and a method for controlling the same. The present invention can provide a user interface through which a user can more intuitively recognize time when an image has been downloaded or received when an image management application is executed to manipulate the image.

## Description

### CROSS-REFERENCE TO RELATED APPLICATIONS

This application claims the benefit of earlier filing date and right of priority to Korean Patent Application No. 10-2015-0109583, filed on August 3, 2015.

### BACKGROUND OF THE DISCLOSURE

### 1. Field of the Disclosure

The present invention relates to a mobile terminal and a method for controlling the same.

### 2. Background of the Disclosure

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components.

### SUMMARY OF THE DISCLOSURE

Accordingly, an object of the present invention is to address the above-noted and other problems.

Another object of the present invention is to provide a mobile terminal providing a user interface through which a user can easily and efficiently control the mobile terminal and a method for controlling the same.

Yet another object of the present invention is to provide a mobile terminal providing a user interface through which the user can recognize content download or reception time more intuitively when using a gallery application, and a method for controlling the same.

Yet another object of the present invention is to provide a mobile terminal providing a user interface through which the user can search content more easily by using the gallery application in connection with download sources, and a method for controlling the same.

Yet another object of the present invention is to provide a mobile terminal capable of accessing a source of stored content through an easier and more intuitive method in use of the gallery application, and a method for controlling the same.

It will be appreciated by persons skilled in the art that the objects that can be achieved with the present invention are not limited to what has been particularly described hereinabove and the above and other objects that the present invention can achieve will be more clearly understood from the following detailed description.

According to one aspect of the present invention, a mobile terminal includes: a touchscreen; a memory configured to store downloaded images, each of the images having been obtained from a respective source; and a controller configured to cause the touchscreen to display a fist image from among the stored images, a screen associated with a source of the first image in response to a first input received with regard to the first image, wherein the screen includes the first image and other screen information.

The stored images may be stored in the memory in connection with an image management application, and wherein the controller is further configured to execute the image management application to: classify the stored images into a plurality of groups on a basis of their respective source and cause the touchscreen to display a plurality of images according to the classified group.

The source of the first image may include an instant messenger (IM), and wherein the controller is further configured to: cause the touchscreen to display a chat window to permit sharing of the first image when the first input is received with regard to the first image; and cause the touchscreen to display an album storing at least one image shared through the chat window when a second input is received with regard to the first image.

The first input may include a drag input applied to the first image in a first direction, and the second input may include a drag input applied to the first image in a second direction opposite the first direction.

The first input may include a drag input applied to the first image and the second input may include drag input extending from one edge of the touchscreen to another edge of the touchscreen.

Wherein the controller is further configured to: cause the touchscreen to display a first graphical object and a second graphical object corresponding to the IM(instant messenger) on the first image when a drag input applied to the first image is received, and wherein the first input selects the first graphical object and the second input selects the second graphical object.

The first graphical object and the second graphical object may be sequentially displayed on the first image according to length of the drag input of the first input.

The controller may be further configured to: cause the touchscreen to display on the first image a number of the shared images shared through the chat window and a number of images downloaded from among the shared images.

The controller may be configured to cause the touchscreen to display a plurality of images downloaded through the chat window, and to cause the touchscreen to display the second image on the touchscreen on the basis of a time of sharing the second image.

Wherein the controller may be further configured to: cause the touchscreen to display graphical objects indicating sources respectively corresponding to the plurality of groups, and execute a source corresponding to a selected graphical object, when a third input is received while the displaying of the plurality of images according to the classified group.

The graphical objects may be respectively displayed on folders classified into the plurality of groups.

The graphical objects may be provided as a list in which the graphical objects respectively corresponding to the plurality of groups are arranged in a predetermined order, wherein the predetermined order is determined in consideration of download frequency or access frequency.

The third input may include a drag input in a first direction, and the graphical objects may be deleted when a drag input in a direction opposite to the first direction is received after the third input is received.

Wherein when a group corresponding to the instant messenger is selected from the plurality of groups, the controller may be configured to classify images shared through the IM(instant messenger) for respective chat windows and to cause the touchscreen to display the images on the touchscreen, when a group corresponding to the IM is selected from the plurality of groups; and cause the touchscreen to display an object indicating download state information of the shared images along with the shared images.

Wherein when the object displayed on a first chat window is selected, the controller may be configured to download at least one image which has not been downloaded from among the images shared through the first chat window when the object displayed on a first chat window is selected.

Wherein the source is a download source and may include at least one of a message application, a social network service (SNS) application, a web browser, a screenshot application, or an external device linked to the mobile terminal through short-range communication.

According to another aspect of the present invention, a method for controlling a mobile terminal having a touchscreen and memory comprising: downloading and storing images in the memory;
displaying, on the touchscreen, a first image from among the stored images: and displaying, on the touchscren, a screen associated with a source of the first image in response to a first input received with regard to the first image, wherein the screen include the first image and other screen information.

The method further comprising: executing an image management application to classify the stored images into a plurality of groups on a basis of their respective source: and displaying, on the touchscreen, a plurality of images according to the classified group.

Wherein the source of the first image may be a download source and include an instant messenger, and the screen including the first image may include a chat window through which the first image is shared or an album storing at least one image shared through the chat window, when the instant messenger is executed.

The mobile terminal and the method for controlling the same according to the present invention have the following advantages.

According to the present invention, provision of a user interface for enabling a user to easily and efficiently control the mobile terminal is possible.

According to the present invention, it is possible to provide a user interface for enabling the user to recognize a content download or reception time more intuitively when using the gallery application.

According to the present invention, it is possible to provide a user interface for enabling the user to search content more easily by using the gallery application in connection with content download sources.

According to the present invention, it is possible to access a source of stored content through an easier and more intuitive method in use of the gallery application.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from the detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1 is a block diagram of a mobile terminal in accordance with the present disclosure;
FIG. 2 illustrates a system configuration for implementing a method for controlling the mobile terminal according to an embodiment of the present disclosure;
FIG. 3 is a flowchart illustrating a method for controlling the mobile terminal according to an embodiment of the present disclosure;
FIG. 4 is a flowchart illustrating a method for controlling the mobile terminal according to a first embodiment of the present disclosure;
FIG. 5a is a view for explaining steps S100, S110 and S120 of FIG. 4;
FIG. 5b is a view for explaining steps S130 and S 140 of FIG. 4;
FIG. 5c is a view for explaining step S150 of FIG. 4;
FIGS. 6 to 11 are views for explaining an example of accessing an image download source during execution of a gallery application according to the first embodiment of the present disclosure;
FIGS. 12 to 16b are views for explaining another example of accessing an image download source according to the first embodiment of the present disclosure;
FIG. 17 is a flowchart illustrating a method for controlling the mobile terminal according to a second embodiment of the present disclosure;
FIGS. 18a to 20b are views for explaining the method for controlling the mobile terminal according to a second embodiment of the present disclosure;
FIG. 21 is a flowchart illustrating a method for controlling the mobile terminal according to a third embodiment of the present disclosure; and
FIGS. 22 and 23 are views for explaining the method for controlling the mobile terminal according to the third embodiment of the present disclosure;

### DETAILED DESCRIPTION OF THE PREFERRED EMBODIMENTS

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

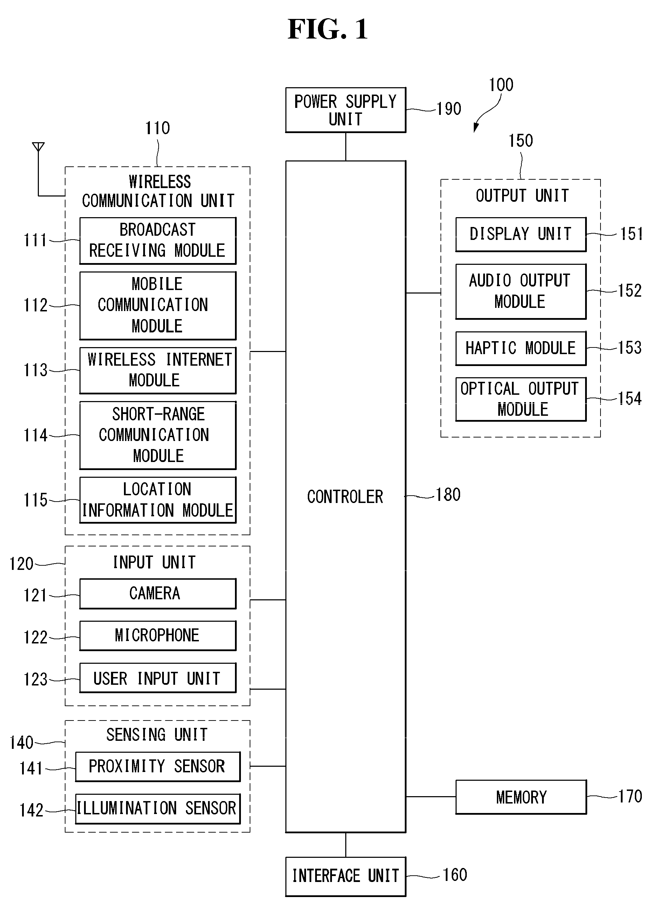

FIG. 1 is a block diagram of a mobile terminal in accordance with the present disclosure.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touchscreen. The touchscreen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in FIG. 1, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH^{™}, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touchscreen through software processing, or a touch key which is located on the mobile terminal at a location that is other than the touchscreen. On the other hand, the virtual key or the visual key may be displayed on the touchscreen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touchscreen, or near the touchscreen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touchscreen is implemented as a capacitance type, the proximity sensor 141 can sense proximity of a pointer relative to the touchscreen by changes of an electromagnetic field, which is responsive to an approach of an object with conductivity. In this case, the touchscreen (touch sensor) may also be categorized as a proximity sensor.

The term "proximity touch" will often be referred to herein to denote the scenario in which a pointer is positioned to be proximate to the touchscreen without contacting the touchscreen. The term "contact touch" will often be referred to herein to denote the scenario in which a pointer makes physical contact with the touchscreen. For the position corresponding to the proximity touch of the pointer relative to the touchscreen, such position will correspond to a position where the pointer is perpendicular to the touchscreen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touchscreen. In addition, the controller 180 can control the mobile terminal 100 to execute different operations or process different data according to whether a touch with respect to a point on the touchscreen is either a proximity touch or a contact touch.

A touch sensor can sense a touch applied to the touchscreen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touchscreen or a touch key provided in addition to the touchscreen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touchscreen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touchscreen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touchscreen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

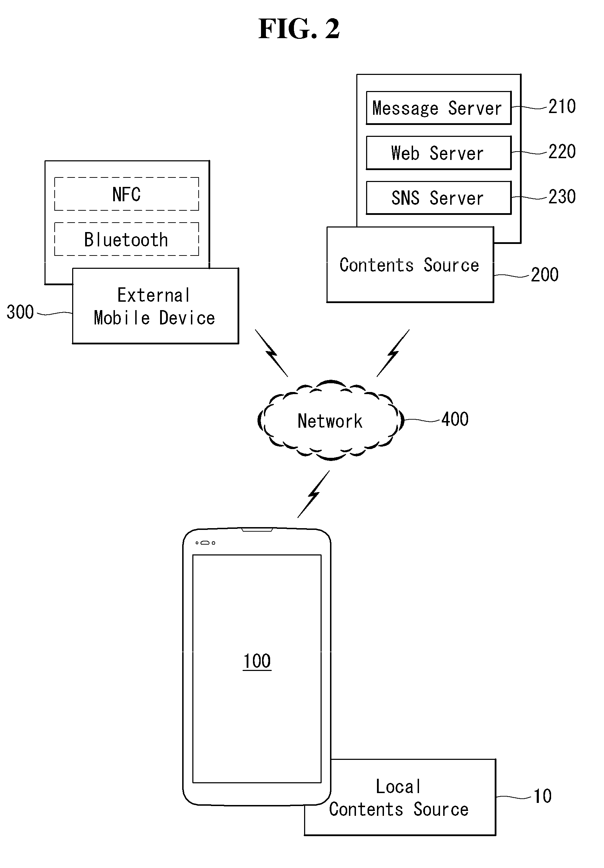

FIG. 2 illustrates a system configuration for implementing a method for controlling the mobile terminal according to an embodiment of the present disclosure.

A method for controlling the mobile terminal according to an embodiment of the present disclosure may be implemented in the environment shown in FIG. 2. Referring to FIG. 2, the environment for implementing the method for controlling the mobile terminal according to an embodiment of the present disclosure may include the mobile terminal 100, a content source 200, an external mobile device 300 and a network 400.

A gallery software application installed and executed in the mobile terminal 100 enables a user to search, view and interact with various types of content. The content may include still images, video, text, webpages and the like.

Content that can be provided through the gallery application may be stored locally (i.e., in the mobile terminal) or remotely (i.e. on a network server). Accordingly, in the case of content stored in the mobile terminal 100, the mobile terminal 100 can be the source of the content. When content is downloaded from an external device and stored in the mobile terminal 100, the external device can be the source of the content.

The mobile terminal 100 may include a local content source 10. The local content source 10 may include images (sill images or video) captured through the camera (121 of FIG. 1) of the mobile terminal 100, images captured through a screenshot function of the mobile terminal 100 and the like. That is, the source of content (images) stored in the mobile terminal 100 can be the mobile terminal 100.

The content source 200 may be connected with the mobile terminal 100 through the network 400 and may include a message server 210, a web server 220, an SNS server 230 and the like. The content source 200 is not limited to the aforementioned examples and can include any device through which the mobile terminal 100 can access an external server to download content.

For example, when a message application is executed in the mobile terminal 100, a specific image can be downloaded through the message server 210 using a predetermined chat window as an interface. Furthermore, the mobile terminal 100 can display a predetermined webpage by executing a web browser, download predetermined content from the web server 220 using the webpage as an interface and store the downloaded content. In addition, the mobile terminal 100 can execute an SNS application, download content provided through the execution screen of the SNS application through the SNS server 230 and store the downloaded content.

While the mobile terminal 100 can download content provided by other terminals from a server through the external content source 200 and store the downloaded content, the mobile terminal 100 may establish a predetermined short-range communication link with the external mobile device 300, directly download content locally stored in the external mobile device 300 and store the downloaded content.

The network 400 may be open Internet, Intranet, a firewall security network, a wideband cellular network (e.g., 3G network), a wired network, a wireless network (Wi-Fi or Bluetooth) or a combination thereof.

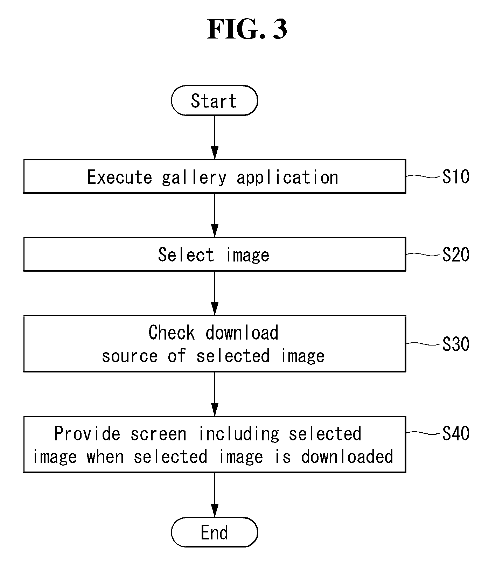

FIG. 3 is a flowchart illustrating a method for controlling the mobile terminal according to an embodiment of the present disclosure.

As described above with reference to FIG. 2, the mobile terminal 100 can download images through a predetermined download source, store the images in the memory and manage the stored images through an image management program, for example, the gallery application.

Referring to FIG. 3, the controller 180 may execute the gallery application (S10). Upon execution of the gallery application, a plurality of images stored in the memory 170 can be displayed on the touchscreen 151.

The controller 180 may confirm selection of a specific image from the plurality of images (S20) and check the download source of the selected image (S30). As described above with reference to FIG. 2, download sources can include a message server, a web server, an SNS server and the like. That is, when the user downloads and stores an image provided by a predetermined application while the application is executed, the application can be a download source.

The controller 180 may provide an image corresponding to the download time of the image to the touchscreen 151 when the download source is confirmed (S40). The user has no option but to remember sources of pictures stored in the gallery and messages exchanged when the pictures are downloaded if the gallery application does not additionally provide the sources and the messages. However, according to an embodiment of the present invention, it is possible to access a source of a specific image provided through the gallery application and to directly provide information on download of the specific image if the specific image is downloaded from the source.

That is, according to an embodiment of the present invention, the user can be provided with download history of the specific image through simple operation of the gallery application, without tracing back their memory to access the source, detecting a specific point of the source and additionally searching the specific image download history, since the gallery application is connected with the source of the downloaded image.

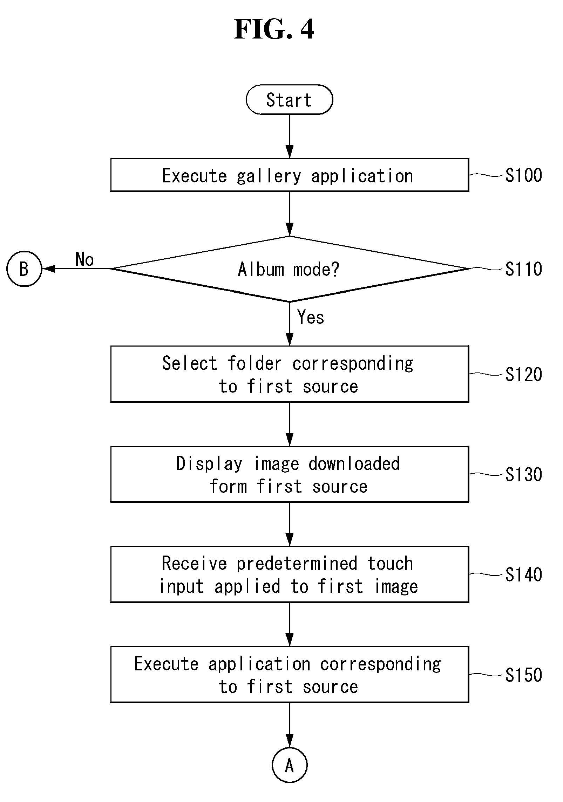

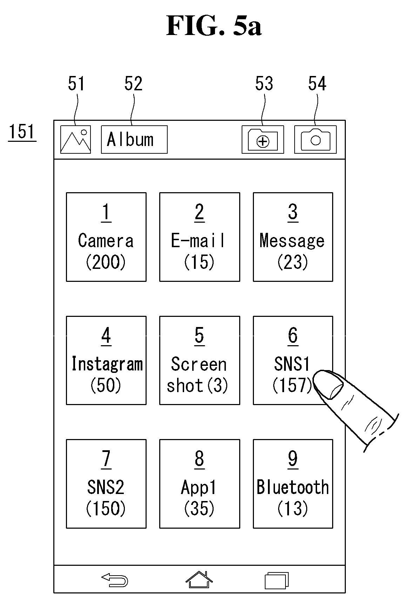

FIG. 4 is a flowchart illustrating a method for controlling the mobile terminal according to a first embodiment of the present disclosure and FIGS. 5a to 5c are views for explaining the first embodiment of the present disclosure. A description will be given of the method for controlling the mobile terminal and operations of the mobile terminal 100 to implement the same according to the first embodiment of the present disclosure with reference to the attached drawings.

Referring to FIG. 4, the controller 180 executes the gallery application (S100).

The gallery application classifies images stored in the memory according to predetermined criteria and displays the images on the touchscreen 151. The predetermined criteria may include an album mode. The album mode is a mode in which stored images are aligned according to predetermined criteria or grouped and displayed. The time and position at which an image is stored, the download path of the image and the like are information that can be confirmed through reception of metadata of the image along with the image. Grouping criteria may be image download sources.

In the following description, it is assumed that the album mode is a mode in which a plurality of images is classified according to download sources and the classified images are stored in respective folders and provided to the touchscreen 151.

When a plurality of images is displayed in the album mode (S110: YES), the controller 180 may receive input of selecting a folder corresponding to a first download source (S120).

FIG. 5a is a view for explaining steps S100, S110 and S120 of FIG. 4.

Referring to FIG. 5a, the plurality of images stored in the gallery may be displayed respectively corresponding to a plurality of download sources 1 (camera), 2 (e-mail), 3 (message), 4 (Instagram), 5 (Screenshot), 6 (SNS1), 7 (SNS2), 8 (Appl) and 9 (Bluetooth).

The camera folder 1 stores images captured through the camera (121 of FIG. 1) of the mobile terminal 100. The e-mail folder 2 stores images provided and downloaded through the execution screen of an e-mail application when the e-mail application is executed. The message folder 3 stores images downloaded through a message application, such as SMS messages, MMS messages and the like. The Instagram folder 4, SNS1 folder 6 and SNS2 folder 7 store images downloaded through instant messenger applications. The screenshot folder 5 stores images captured through a screen capture function of the mobile terminal 100. The App1 folder 8 stores images downloaded by executing a first application installed in the mobile terminal 100 and the Bluetooth folder 9 stores images transmitted from an external mobile device while the mobile terminal 100 is linked to the external mobile device through a Bluetooth communication link.

Download sources according to an embodiment of the present invention are not limited to the aforementioned example and can include any source from which content can be transmitted to the mobile terminal.

Each folder may indicate the number of images stored therein.

Reference numeral 51 indicates a gallery application icon and reference numeral 52 indicates an album mode indicator for indicating that a view mode of the gallery application is set to the album mode. Reference numeral 53 represents a folder addition icon through which the user can set an image storage path, and reference numeral 54 represents a camera application icon. When the camera application icon is selected during execution of the gallery application, the camera can be executed.

Referring back to FIG. 4, upon selection of the folder corresponding to the first download source, the controller 180 can display a plurality of images stored in the folder on the touchscreen 151 (S130).

The images stored in the folder are images downloaded through an application corresponding to the first download source when the application is executed in the mobile terminal 100.

Subsequently, upon reception of predetermined touch input applied to a first image from among the plurality of images (S140), the controller 180 may execute the application corresponding to the first download source (S150).

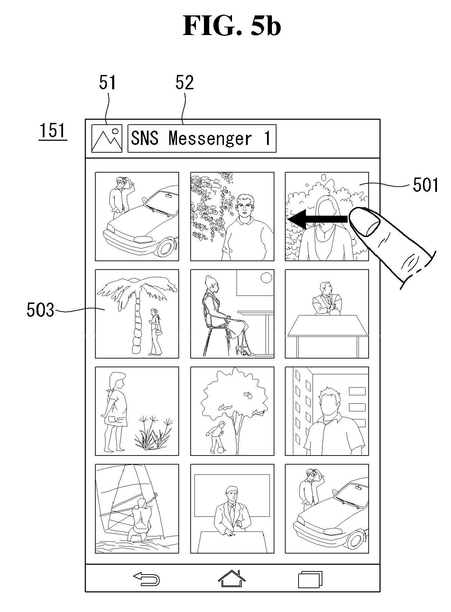

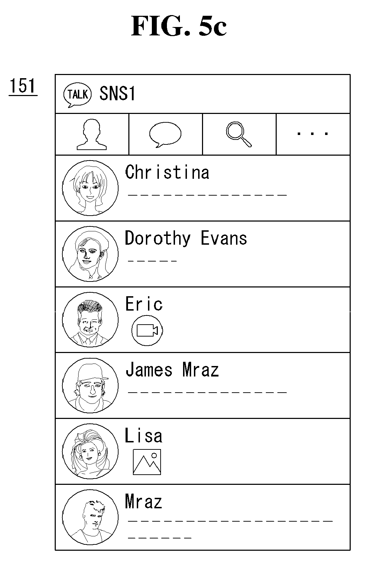

FIG. 5b is a view for explaining steps S130 and S140 of FIG. 4 and FIG. 5c is a view for explaining step S150 of FIG. 4.

Referring to FIGS. 5b and 5c, when SNS1 folder 6 is selected in FIG. 5a, the controller 180 can display a plurality of images downloaded through a first SNS messenger application on the touchscreen 151.

When predetermined touch input applied to a first image 501 from among the plurality of images is received, the controller 180 can display the execution screen of the first SNS messenger application on the touchscreen 151 (refer to FIG. 5c).

The predetermined touch input applied to the first image 501 may include drag input applied to the first image 501. The drag input may be drag input extending from the right end to the left end of the first image 501.

After execution of the gallery application, a specific image can be selected while a plurality of images is displayed on the touchscreen 151 and the selected image can be magnified and displayed on the entire region of the touchscreen 151. According to one embodiment of the present disclosure, drag input from one end of the specific image to the other end thereof, instead of simple touch input, may be applied to the specific image. The controller 180 recognizes the drag input as a special command to directly access the download source of the specific image rather than a command to magnify the specific image and display the magnified image on the entire region of the touchscreen 151.

Execution of the application corresponding to the first download source may include operation of providing a screen, which includes the first image when the first image is downloaded, by executing the application. The screen, which includes the first image when the first image is downloaded, will be described in more detail with reference to the attached drawings.

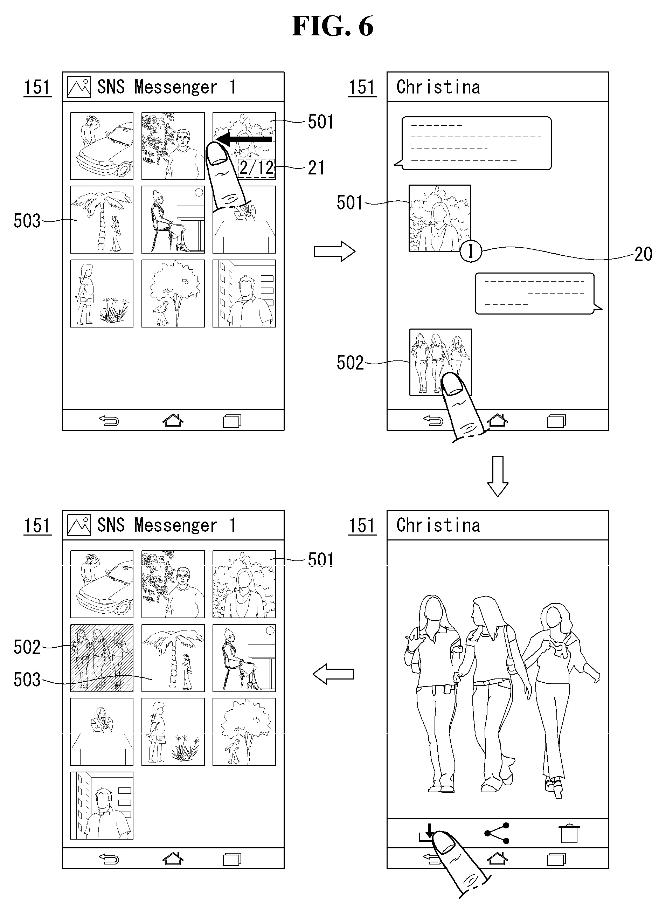

FIGS. 6 to 11 are views for explaining an example of accessing a download source of an image during execution of the gallery application according to the first embodiment of the present disclosure.

Referring to FIG. 6, the download source of the first image 501 is a first instant messenger IM and a plurality of images downloaded through the first instant messenger can be displayed on the touchscreen 151. Here, the plurality of images may be arranged in the order of downloading the images through the first instant messenger application and displayed on the touchscreen 151. For example, it can be known from FIG. 6 that a third image 503 is downloaded after the first image 501 is downloaded (FIG. 6(a)).

When predetermined touch input applied to the first image 501 is received, a chat window through which the first image 501 is shared can be displayed on the touchscreen 151 after the first instant messenger IM (FIG. 6(b)) is accessed.

The predetermined touch input may include drag input applied to the first image 501 in a first direction (from right to left).

The chat window displays not only the downloaded first image 501 but also a second image 502, which is shared through the chat window but not downloaded through user input, and content of conversation with a called party.

When the first image 501 displayed on the chat window has a predetermined different source, link information on the source may be linked to the first image 501. The controller 180 may access the original source of the first image 501 upon selection of the link information 20. As the chat window is provided, the user can make additional conversation.

When the second image 502 which is not downloaded is selected, the controller 180 can download the second image 502 and store the downloaded second image in the memory (FIG. 6(c)).

The controller 180 can place the second image 502 following the first image 501 when arranging images through the gallery application. That is, although the first image 501 and the third image 503 are sequentially downloaded through the messenger application and then arranged on the touchscreen 151 in the download order, the second image 502 may be shared through the chat window prior to the third image 503. In this case, the controller 180 can arrange the second image 502 before the third image by considering the sharing time as having higher priority than the download time (FIG. 6(d)).

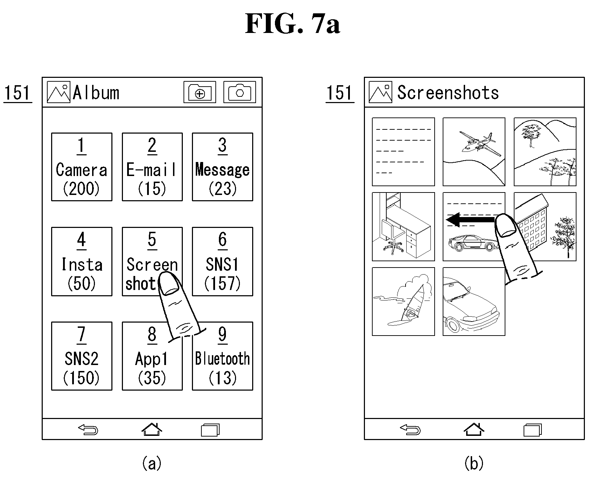

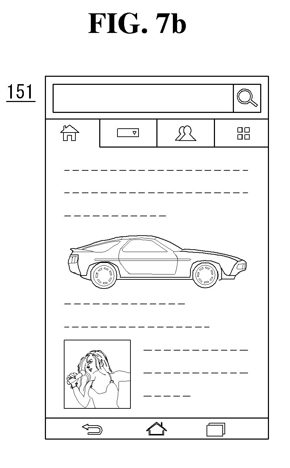

A download source may be the mobile terminal 100 instead of an external device (server, external mobile device or the like) of the mobile terminal 100. Referring to FIG. 7a, when the screenshot folder 5 is selected in the album mode of the gallery application, a plurality of screenshot images stored in the mobile terminal 100 can be displayed on the touchscreen 151. When predetermined input (e.g., drag input from the right end to the left end of a specific image) applied to the specific image is received, the controller 180 can provide a screen, which includes the specific image when the specific image is captured, to the touchscreen 151 (refer to FIG. 7b).

The screen, which includes the specific image when the specific image is captured, may be a webpage. When the webpage is captured through the screen capture function, link information (URL address or the like) of the webpage can be provided as metainformation. Accordingly, when drag input applied to the screen-captured specific image is received in FIG. 7a, the controller 180 can provide the webpage to the touchscreen 151 on the basis of the URL address, as shown in FIG. 7b.

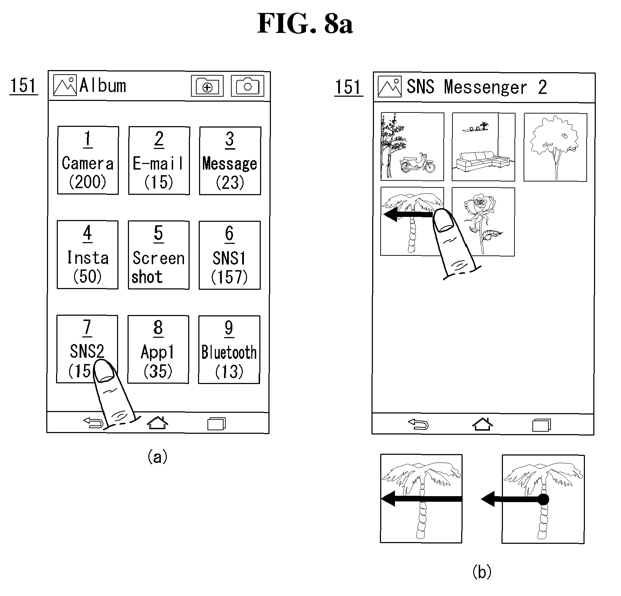

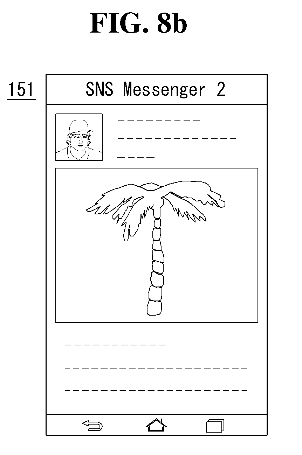

FIGS. 8a and 8b are views for explaining a case in which a download source of an image is the second SNS messenger application according to the first embodiment of the present disclosure.

Referring to FIG. 8(a), when the second SNS messenger application folder 7 is selected in the album mode of the gallery application, a plurality of images downloaded through the second SNS messenger application can be displayed on the touchscreen 151.

Upon reception of drag input applied to a specific image from among the plurality of images, the controller 180 can provide a screen, which includes the specific image when the specific image is downloaded, to the touchscreen 151 (refer to FIG. 8b). The second SNS messenger application may be an application for aligning content uploaded to the server and providing the content chronologically.

Referring to FIG. 8a, upon reception of drag input applied to the specific image, the controller 180 can provide a screen, which includes the specific image when the specific image is uploaded, to the touchscreen 151. The drag input may be input applied to the specific image only or drag input extending from a point on the specific image to a point outside of the specific image.

Referring to FIG. 8b, while the user has downloaded only the specific image through the second SNS application, the user can directly check content provided through the second SNS application when the specific image is downloaded only by applying simple operation to the specific image stored in the gallery after a lapse of time.

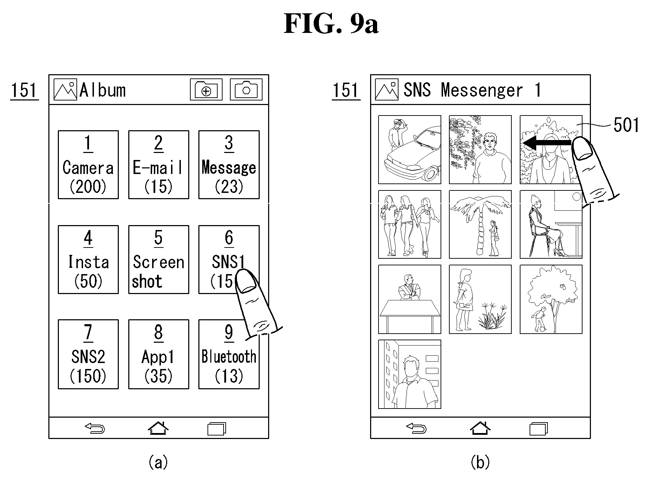

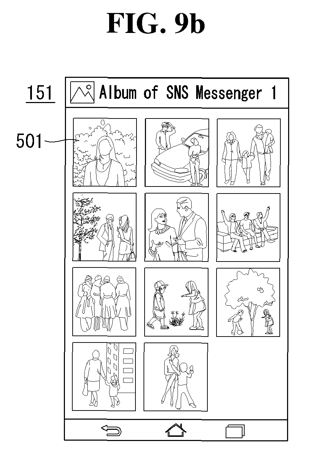

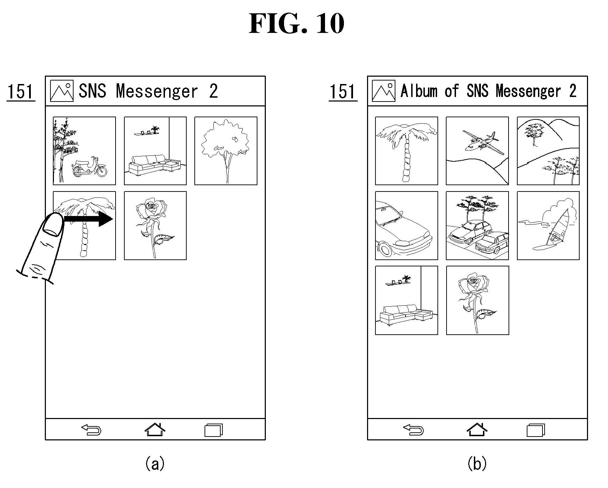

FIGS. 9a, 9b and 10 are views for explaining another example of providing an image corresponding to download time.

Referring to FIGS. 9a and 9b, upon reception of predetermined input applied to the first image 501 downloaded through the first SNS messenger application, an album for storing at least one image shared through a chat window of the first SNS messenger application can be provided to the touchscreen 51. That is, the first SNS messenger application can store an album per chat window. Accordingly, an album shown in FIG. 9b can include all images shared through the chat window through which the first image 501 has been downloaded. That is, the album can include all downloaded images and un-downloaded images from among the images shared through the chat window. Accordingly, the user can more easily check images which are shared when the first image 501 is downloaded.

FIG. 10 shows a case in which the second SNS messenger application is a download source. Upon reception of predetermined touch input (drag input from the left end to the right end of a specific image) applied to the specific image, a user album registered to a user account in the second SNS messenger application can be displayed on the touchscreen 151. The user album registered to the user account may be a path through which the user stores all images downloaded through the second SNS messenger application.

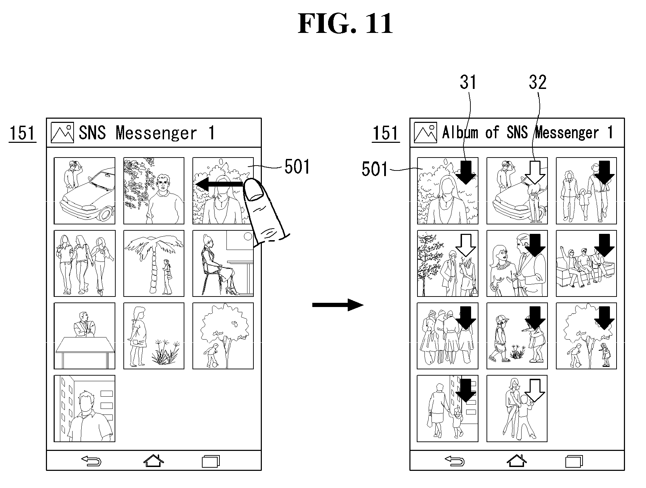

Referring to FIG. 11, upon reception of predetermined touch input (drag input from the right end to the left end) applied to the first image 501 whose download source is the first SNS messenger application, the controller 180 can display an album including all images downloaded through a chat window through which the first image 501 is shared. In addition, the controller 180 can attach an indicator 31 or 32, which indicates whether an image is downloaded or not, to each image displayed on the touchscreen 151. The first indicator 31 indicates that an image has been downloaded and the second indicator 32 indicates that an image has not been downloaded but has been shared through the chat window.

Accordingly, the user can intuitively recognize the source of the specific image through the gallery application and download an image which has not been downloaded from the source through an easier method.

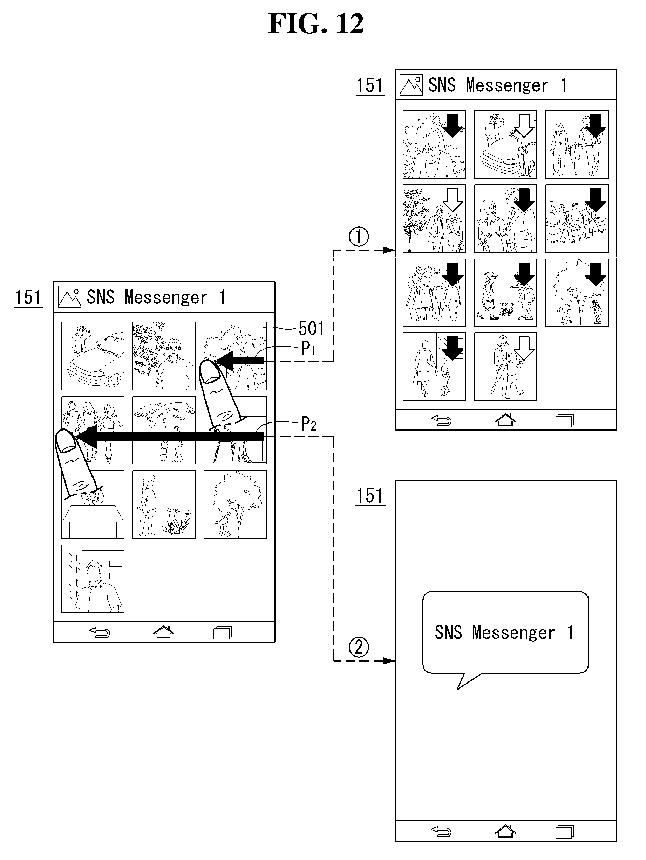

FIGS. 12 to 16b are views for explaining another example of accessing a download source of an image according to the first embodiment of the present disclosure.

When the download source of the first image is the messenger application, the mobile terminal 100 according to an embodiment of the present invention can directly access the chat window displaying the first image when the first image is downloaded or access an album including images shared through the chat window.

Referring to FIG. 12, the controller 180 can access the album upon reception of drag input P1 extending from the right end to the left end of the first image 501. The album can discriminately display downloaded images and un-downloaded images, from among images shared through the chat window, using the aforementioned indicator.

Upon reception of drag input P2 extending from the right end to the left end of the touchscreen on which the first image 501 is displayed, the controller 180 can access the execution screen of the messenger application or the chat window including the first image 501.

In addition, the controller 180 can display the chat window including the first image 501 on the touchscreen 151 upon reception of drag input applied to the first image 501 in a first direction and may display the album on the touchscreen 151 upon reception of drag input applied to the first image 501 in a second direction opposite the first direction.

A description will be given of examples of accessing a chat window through which images downloaded according to input in a predetermined pattern are shared or accessing an album including the images shared through the chat window, with respect to an image downloaded through the first messenger application, with reference to the attached drawings.

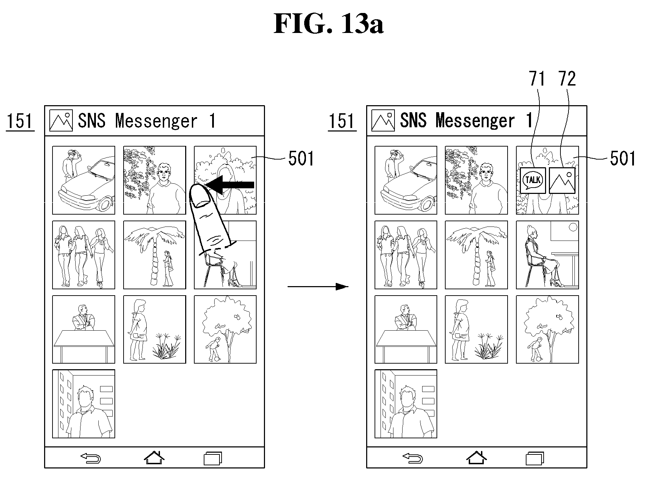

Referring to FIG. 13a, upon reception of drag input applied to the first image 501, the controller 180 can display a first graphical object 71 and a second graphical object 72 corresponding to the first messenger application on the first image 501.

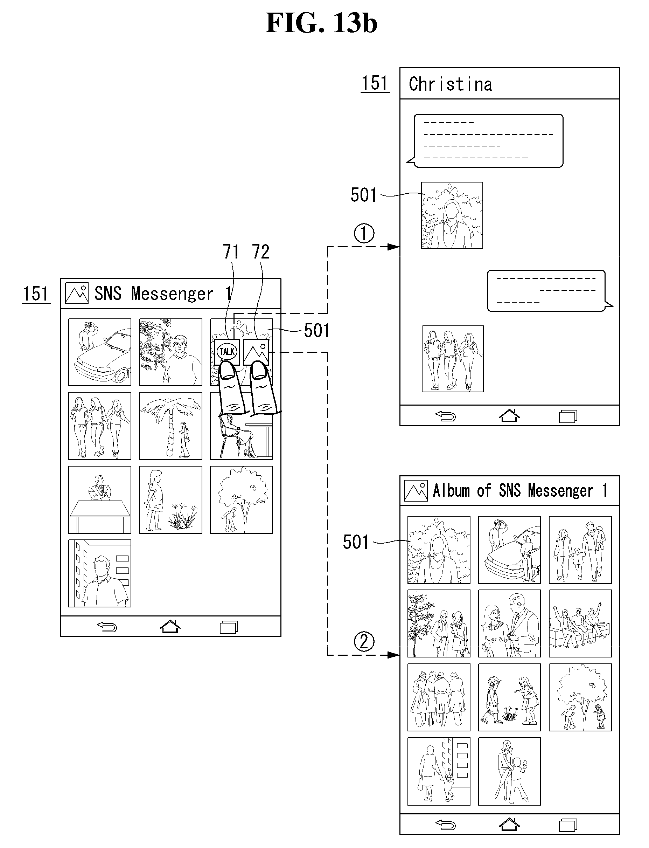

Referring to FIG. 13b, the controller 180 displays the chat window on the touchscreen 151 when the first graphical object 71 is selected and displays the album on the touchscreen 151 when the second graphical object 72 is selected.

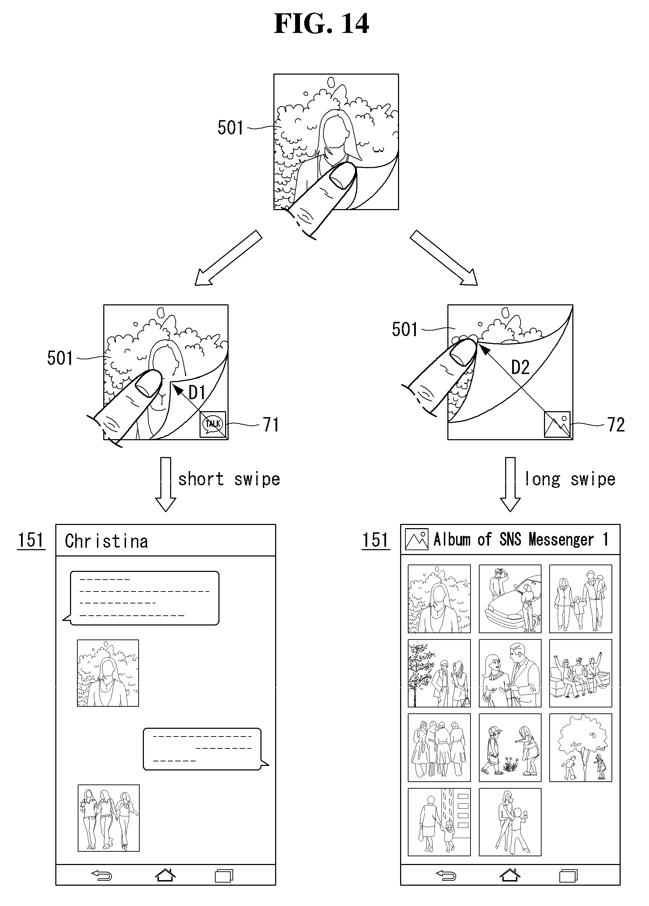

Referring to FIG. 14, the controller 180 can sequentially display the first graphical object 71 and the second graphical object 72 on the first image 501 according to the length of the drag input applied to the first image 501.

The drag input applied to the first image 501 may be drag input starting from a corner of the bottom end of the first image 501.

When touch applied to the first image 501 is dragged by a first distance D1, the first graphical object 71 is displayed at the corner of the bottom end of the first image 501. When the first graphical object 71 is selected, the controller 180 can access the chat window. Alternatively, when the touch applied to the first image 501 is dragged by the first distance D1 the controller 18 can directly enter the chat window without displaying the first graphical object 71.

When touch applied to the first image 501 is dragged by a second distance D2, the second graphical object 72 is displayed at the corner of the bottom end of the first image 501. The controller 180 can enter the album upon selection of the second graphical object 72 or reception of drag input by the second distance D2.

When drag input starting from a corner of the bottom end of the first image 501 is received, the effect of folding the image along the drag input can be provided. The folded area may depend on the length of the drag input.

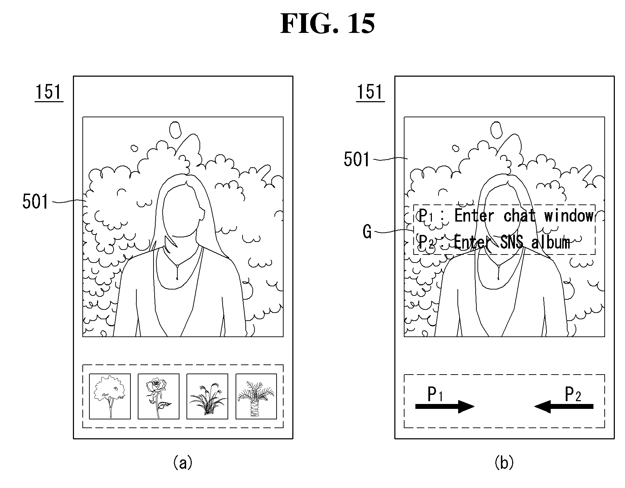

Referring to FIG. 15, upon selection of the first messenger application folder after execution of the gallery application, the controller 180 can display a plurality of images downloaded through the first messenger application on the touchscreen 151. Upon reception of touch input for selecting the first image 501 from the plurality of images, the controller 180 can display the first image 501 in a first region of the touchscreen 151.

The controller 180 can display images other than the first image in a second region of the touchscreen 151 as thumbnail images. The controller 180 can display guide information for guiding access to the download source of the first image in the second region of the touchscreen 151. The guide information can include guide information for guiding drag input P1 in a first direction or drag input P2 in a second direction.

The first region may be the entire region of the touchscreen 151. That is, the thumbnail images or the guide information may be displayed in the second region overlapping at least part of the first region while the first image 501 is displayed in the entire region of the touchscreen 151.

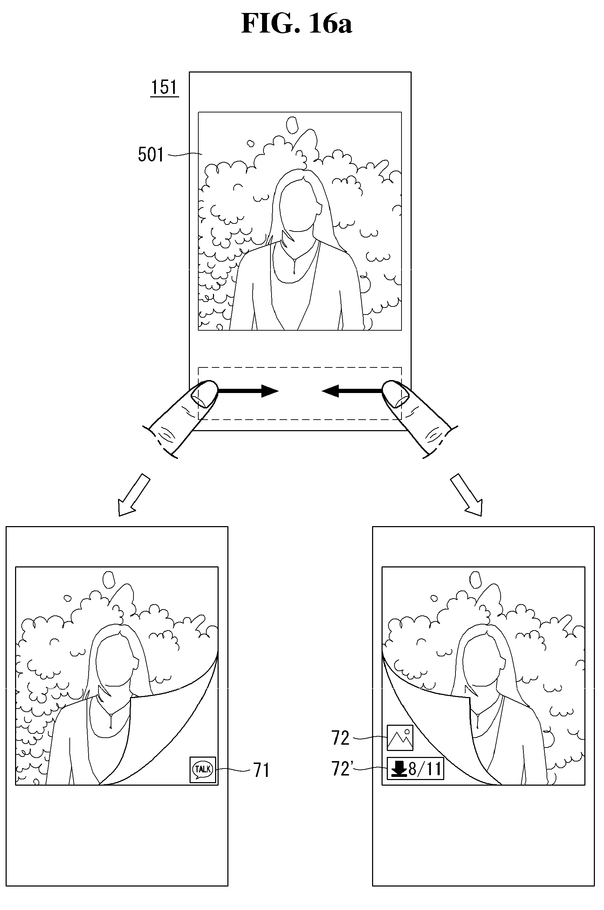

Referring to FIG. 16a, the first region and the second region are as described above with reference to FIG. 15. Upon reception of drag input P1 applied to the second region of the touchscreen 151 in the first direction while the first image 501 is displayed in the first region of the touchscreen 151, the controller 180 can display the first graphical object 71 in the first region. The first image 501 can be provided with animation effects of flipping the image according to the drag input P1. The first graphical object 71 corresponds to a function of entering the chat window.

Upon reception of drag input P2 applied to the second region of the touchscreen 151 in the second direction opposite the first direction, the controller 180 can display the second graphical object 72. The second graphical object 72 corresponds to a function of entering the album. The first image 501 is provided with animation effects of flipping the image according to the drag input P2. A download object 72' indicating the number (11) of images provided through the album and the number (8) of downloaded images from among the images can be displayed along with the second graphical object 72.

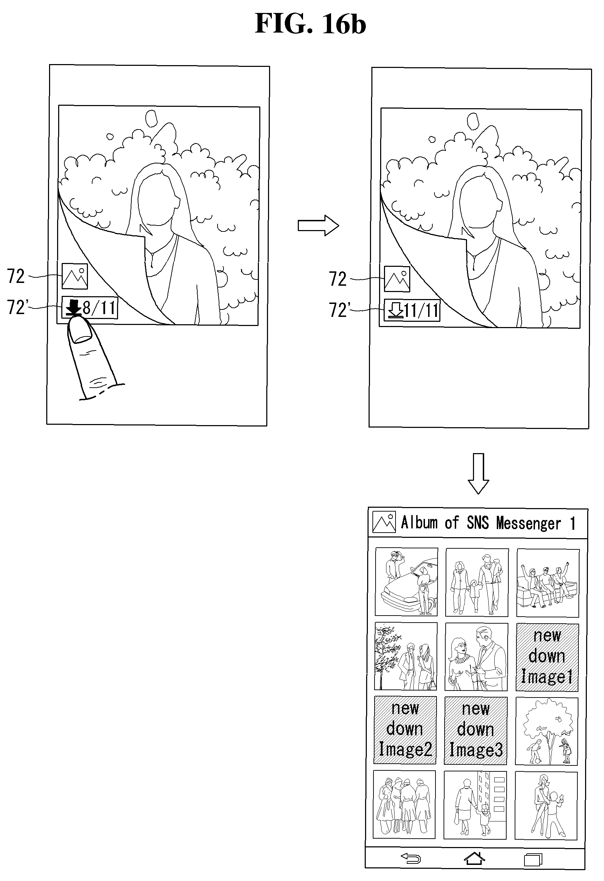

Referring to FIG. 16b, when the download object 72' is selected, the controller 180 can download images, which are included in the chat window through which the first image 501 is shared but has not been downloaded, without additionally executing the messenger application.

When new images are downloaded through the download object 72', the controller 180 can arrange the downloaded images in the album on the basis of time when the images are shared.

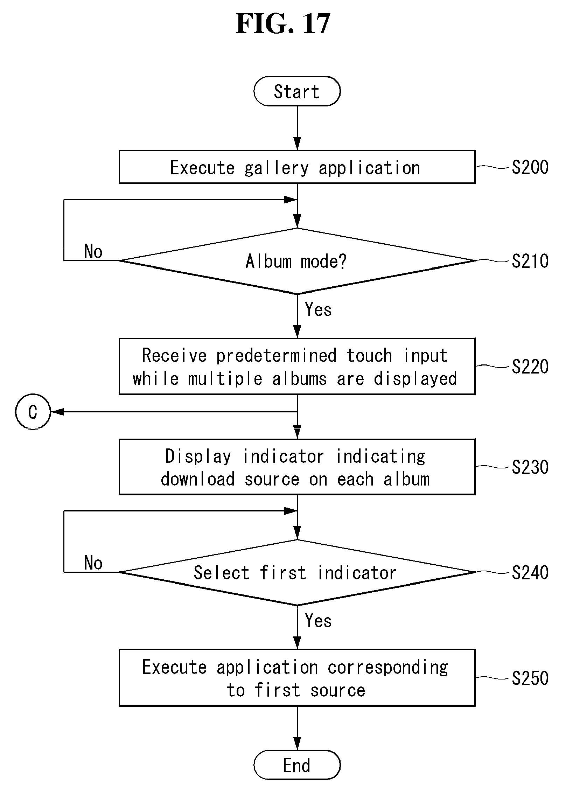

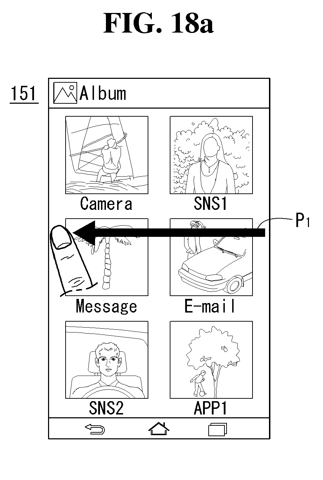

FIG. 17 is a flowchart illustrating a method for controlling the mobile terminal according to a second embodiment of the present disclosure and FIGS. 18a to 20b are views for explaining the second embodiment of the present disclosure. A description will be given of the method for controlling the mobile terminal and operations of the mobile terminal 100 to implement the same according to the second embodiment of the present disclosure with reference to the attached drawings. The second embodiment of the present disclosure may be implemented based on the first embodiment.

Referring to FIG. 17, the controller 180 executes the gallery application (S200). The controller 180 can set a view mode of a plurality of images managed by the gallery application to the album mode and display the plurality images as a plurality of folders classified on the basis of download sources (S210). Steps S200 and S210 respectively correspond to steps S100 and S110 according to the first embodiment of the present disclosure and detailed description thereof is thus omitted.

The controller 180 receives predetermined touch input while a plurality of albums (folders) is displayed on the touchscreen 151 (S220). Referring to FIG. 18a, the predetermined touch input may include first drag input P1 extending from one edge of the touchscreen 151 to the other edge thereof.

The controller 180 can respectively display a plurality of graphical objects indicating download sources on the plurality of albums (folders) (S230). Upon reception of input of selecting a first graphical object from among the plurality of graphical objects (S240), the controller 180 can execute an application corresponding to a first download source (S250).

That is, the second embodiment of the present disclosure can provide icons indicating download sources through predetermined touch input in the album mode of the gallery application to enable the user to directly execute an application corresponding to a specific download source.

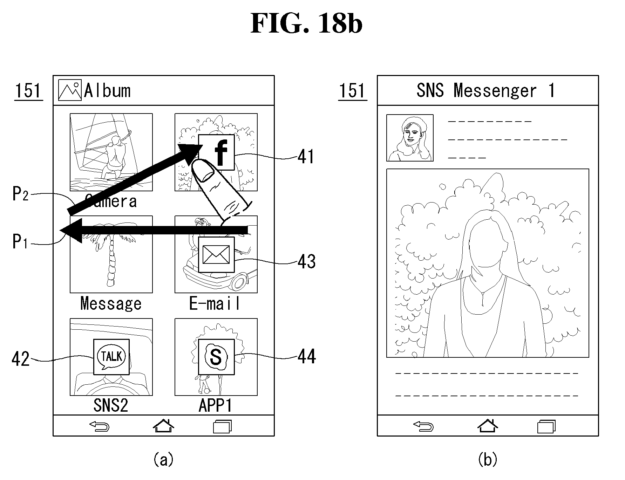

Referring to FIG. 18b, upon reception of the first drag input P1, the controller 180 can respectively display graphical objects 41, 42, 43 and 44 indicating download sources on folders corresponding thereto. The graphical objects may be application icons. Upon reception of second drag input P2 of extending the first drag input to one of the plurality of application icons while the first drag input P1 is maintained (FIG. 18b(a)), the controller 180 can execute an application corresponding to the application icon 41 to which the second drag input P2 is applied (FIG. 18b(b)).

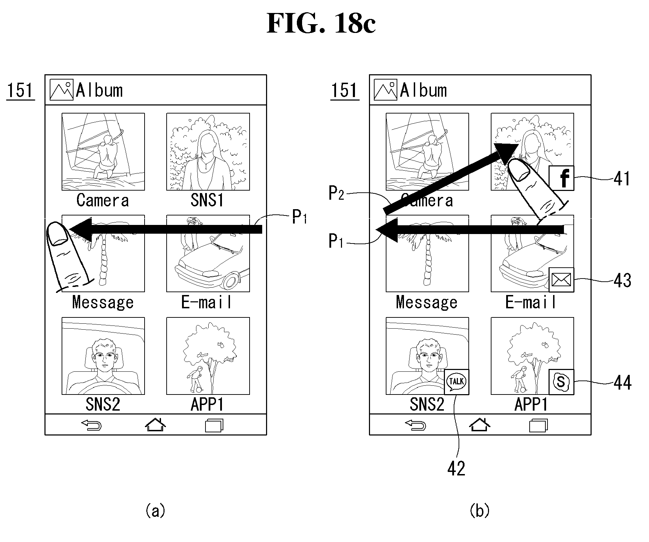

The positions of the application icons 41, 42, 43 and 44 displayed on the folders may be changed. The application icons 41, 42, 43 and 44 are respectively arranged at the centers of the corresponding folders in FIG. 18b, whereas the application icons 41, 42, 43 and 44 are respectively arranged at the lower right sides of the corresponding folders so as not to cover representative images of the folders in FIG. 18c.

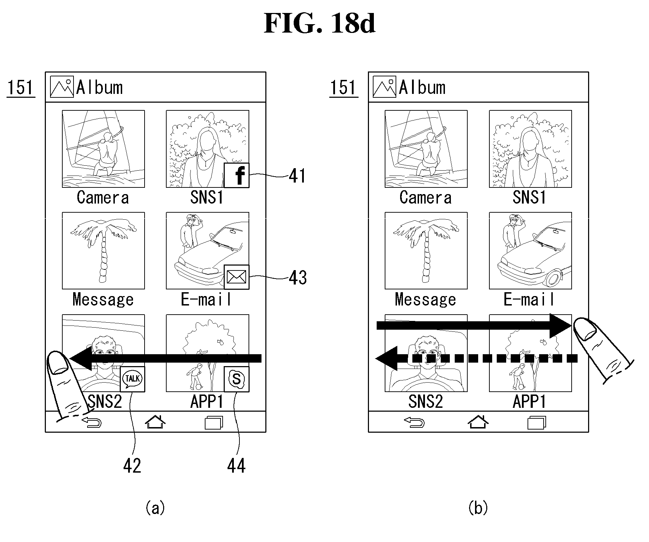

Referring to FIG. 18d, upon reception of the second drag input P2 in a direction opposite the first drag input P1 while the application icons 41, 42, 43 and 44 are displayed according to the first drag input P1 extending from one edge of the touchscreen 151 to the other edge thereof in FIG. 18a, the controller 180 can delete the application icons 41, 42, 43 and 44 displayed on the corresponding folders.

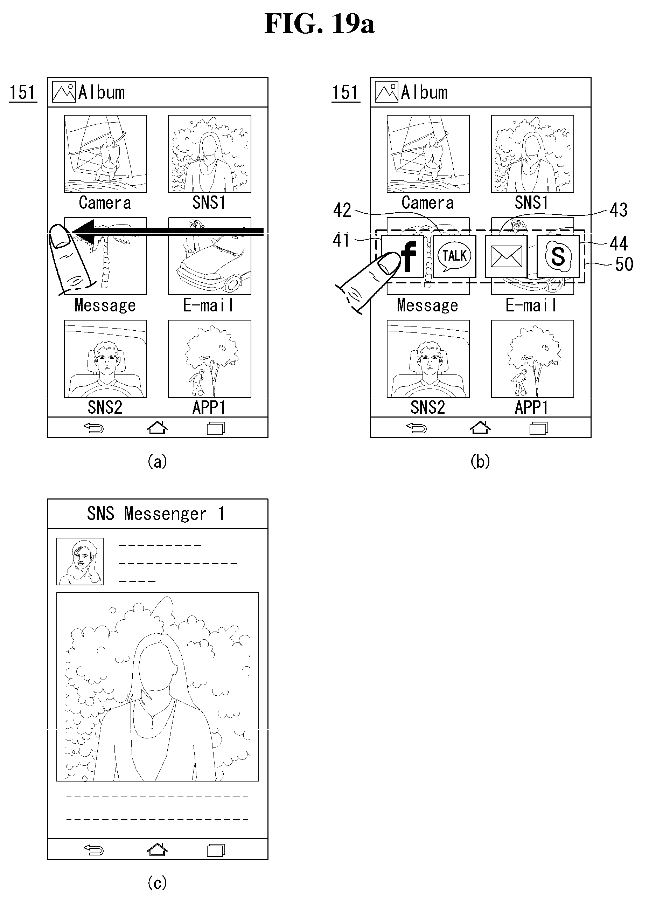

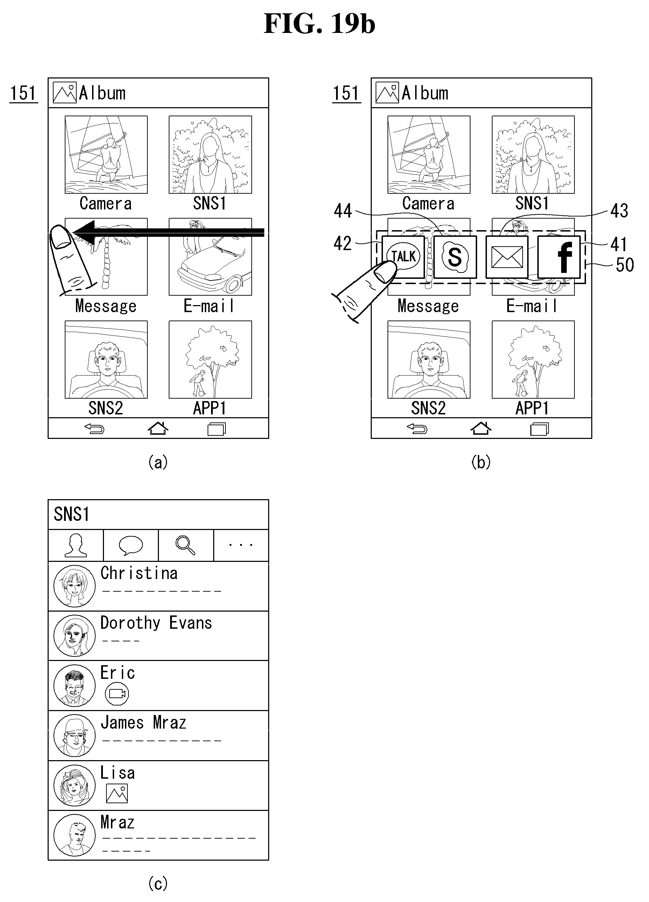

FIGS. 19a and 19b are views for explaining another example of displaying the application icons 41, 42, 43 and 44 while the gallery application is executed. A description will be given of procedure ⓒ of FIG. 17.

Referring to FIG. 19a, reception of the first drag input P1 extending from one edge of the touchscreen 151 to the other edge thereof, the controller 180 can display a list 50 in which application icons 41, 42, 43 and 44 are arranged in a predetermined order on the touchscreen 151. The predetermined order can be determined in consideration of at least one of download frequency or access frequency.

For example, the controller 180 can provide, to the touchscreen 151, the list 50 in which the application icons 41, 42, 43 and 44 are arranged in descending order of the number of image downloads, as shown in FIG. 19a. Accordingly, the user can easily access an application which is most frequently used for image download by selecting the application icon 41 arranged first in the list 50.

Referring to FIG. 19b, the controller 180 can provide, to the touchscreen 151, the list 50 in which the application icons 42, 44, 43 and 41 are arranged in image access order in such a manner that the application corresponding to the most recently accessed image is arranged first. Accordingly, the user can easily access the application most recently used for image download by selecting the first application icon 42 arranged in the list 50.

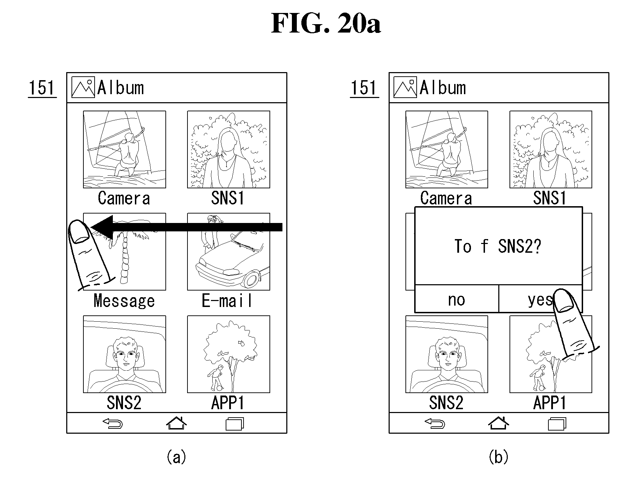

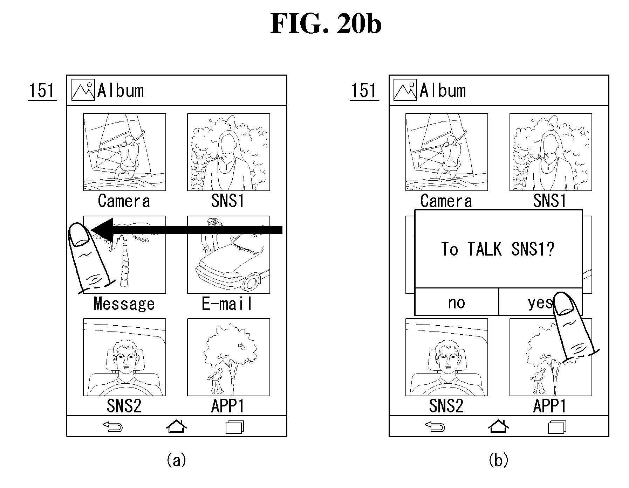

Distinguished from the case in which the application list 50 is provided, illustrated in FIGS. 19a and 19b, the controller 180 can provide an inquiry window through which the user can access a most frequently used application according to the first drag input P1 extending from one edge of the touchscreen 151 to the other edge thereof, as shown in FIG. 20a. In addition, the controller 180 can provide an inquiry window for directly accessing an application most frequently used for image download according to the first drag input P1 extending from one edge of the touchscreen 151 to the other edge thereof, as shown in FIG. 20b.

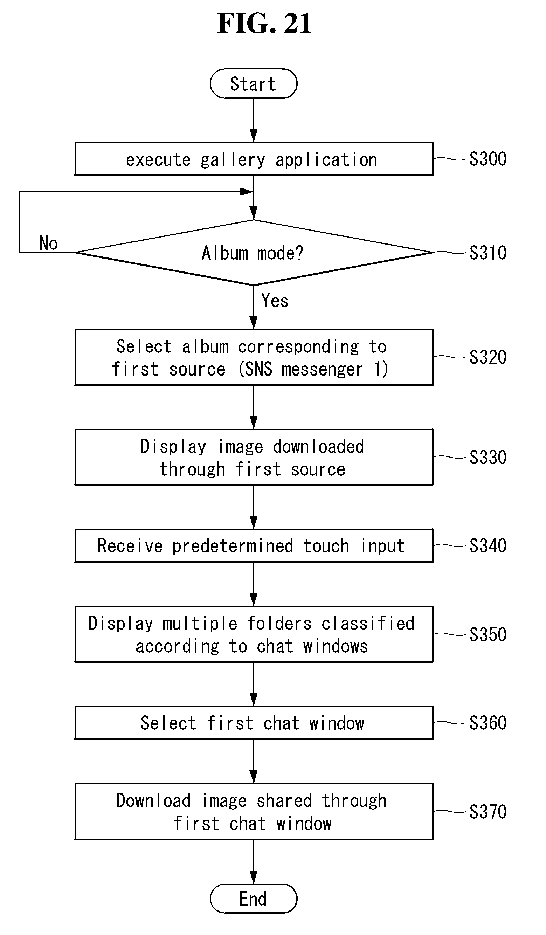

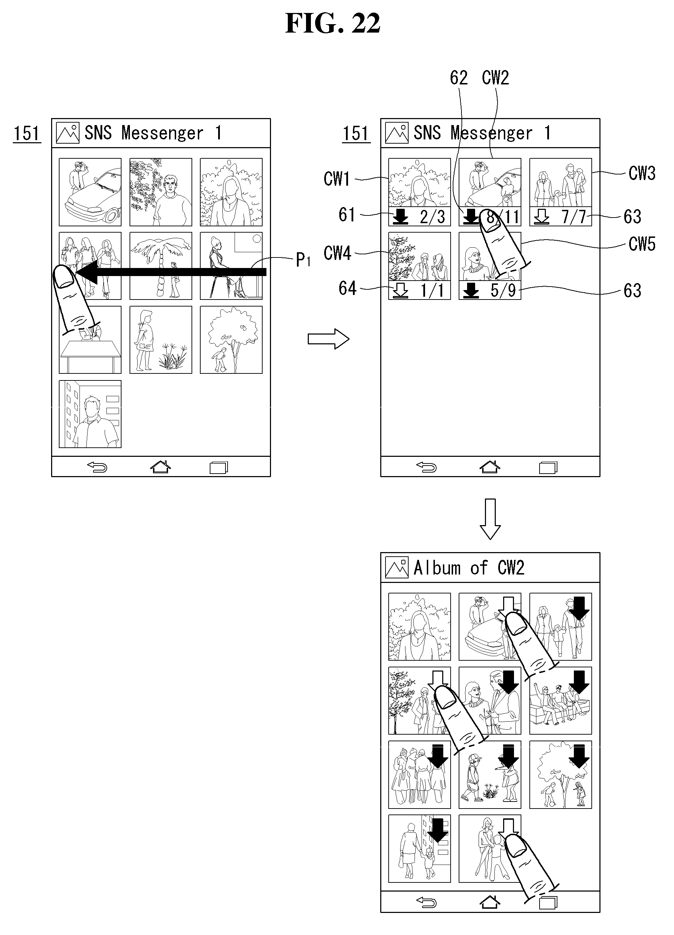

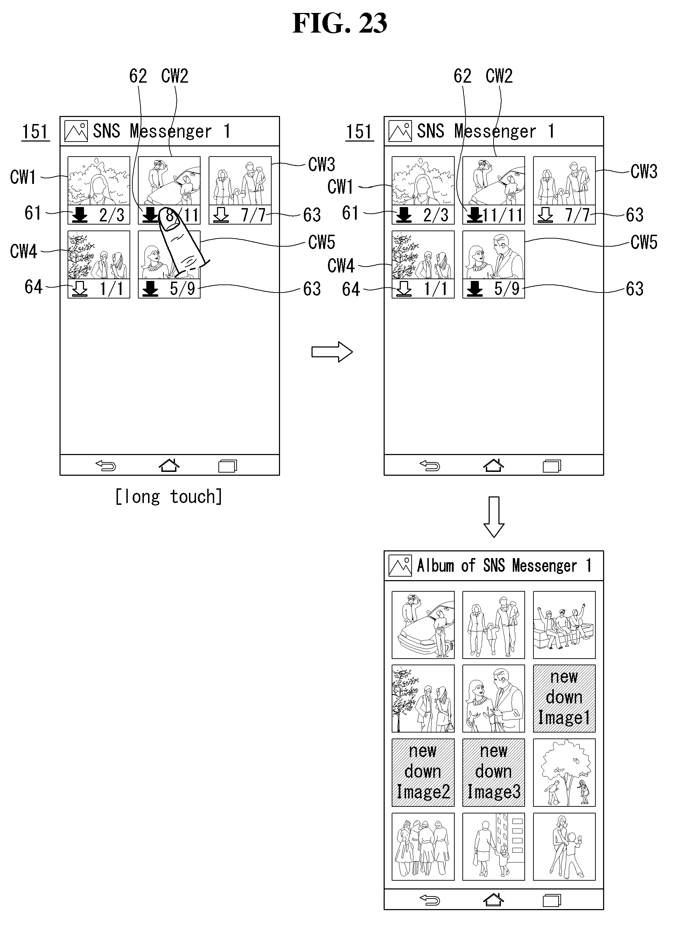

FIG. 21 is a flowchart illustrating a method for controlling the mobile terminal according to a third embodiment of the present disclosure and FIGS. 22 and 23 are views for explaining the third embodiment of the present disclosure.

The method for controlling the mobile terminal according to the third embodiment of the present disclosure may be implemented in the mobile terminal 100 described above with reference to FIGS. 1a to 2. A description will be given of the method for controlling the mobile terminal and operations of the mobile terminal 100 to implement the same according to the third embodiment of the present disclosure with reference to the attached drawings. The third embodiment of the present disclosure may be based on the first embodiment and/or the second embodiment and implemented by a combination of the embodiments.

Referring to FIG. 21, the controller 180 executes the gallery application (S300). The controller 180 can set the view mode of a plurality of images managed by the gallery application to the album mode and display the plurality of images as a plurality of folders classified according to download sources (S310). Steps S300 and S310 respectively correspond to steps S100 and S110 according to the first embodiment of the present disclosure and thus detailed description thereof is omitted.

The controller 180 can display the plurality of albums (folders) classified according to download sources on the touchscreen 151 and display a plurality of images downloaded through a first source (first download source) on the touchscreen 151 (S330) upon reception of input of selecting an album (folder) corresponding to the first source (first download source) from the plurality of albums (folders) (S320).

The controller 180 receives predetermined touch input while the plurality of albums (folders) is displayed on the touchscreen 151 (S340). Referring to FIG. 22, the predetermined touch input may include the first drag input P1 extending from one edge of the touchscreen 151 to the other edge thereof. The controller 180 displays folders CW1, CW2, CW3, CW4 and CW5 storing images shared through the first download source and classified according to chat windows on the touchscreen 151 according to the first drag input P1. The controller 180 can respectively display objects 61, 62, 63, 64 and 65, which indicate download state information of the images shared through the respective chat windows, on the folders CW1, CW2, CW3, CW4 and CW5.

The download state information may include the number of images shared through each chat window and the number of downloaded images from among the shared images.

The download state information may additionally include an object indicating whether download has been completed. The controller 180 can enable the user to intuitively recognize a case in which the shared images include an image that has not been downloaded by changing display characteristics of the object. For example, the controller 180 can display the object in a bright color and high brightness when all images shared through a chat window have been downloaded and display the object in a dark color and low brightness when the shared images include an image to be downloaded.

Upon selection of the second folder CW2 or reception of input of selecting download state information mapped to the second folder CW2, the controller 180 can display a plurality of images included in the second folder CW2 on the touchscreen 151. The object indicating whether download has been completed can be mapped to each of the plurality of images and displayed. Accordingly, the user can select an image which has not been downloaded using the object and easily download the image. For example, the download state information of the second folder CW2 indicates that 11 images have been shared and 8 of the 11 images have been downloaded. In addition, the user can easily download a desired image from among images which have not been downloaded by selecting an object displayed in a bright color or high brightness from among the objects displayed on the corresponding folders.

Referring to FIG. 23, upon reception of long touch applied to the download state information of the second folder CW2, described above with reference to FIG. 22, the controller 180 controls all images which have not been downloaded to be simultaneously downloaded without displaying the images included in the second folder CW2. Accordingly, the download state information of the second folder CW2 can be changed in real time. In addition, the controller 180 can arrange newly downloaded images and display the newly downloaded images on the touchscreen 151 on the basis of the time of sharing the images through the corresponding chat windows.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds, are therefore intended to be embraced by the appended claims.

## Claims

1. A mobile terminal, comprising:
a touchscreen;
a memory configured to store images, each of the images having been obtained from a respective source; and
a controller configured to:
cause the touchscreen to display a first image from among the stored images; and
cause the touchscreen to display a screen associated with a source of the first image in response to a first input received with regard to the first image, wherein the screen includes the first image and other screen information.

2. The mobile terminal of claim 1, wherein the stored images are stored in the memory in connection with an image management application, and
wherein the controller is further configured to execute the image management application to:
classify the stored images into a plurality of groups on a basis of their respective source; and
cause the touchscreen to display a plurality of images according to the classified group.

3. The mobile terminal as claimed in any one of claim 1 or 2, wherein the source of the first image includes an instant messenger (IM), and
wherein the controller is further configured to:
cause the touchscreen to display a chat window to permit sharing of the first image when the first input is received with regard to the first image; and
cause the touchscreen to display an album storing at least one image shared through the chat window when a second input is received with regard to the first image.

4. The mobile terminal as claimed in any one of claims 1 to 3, wherein the first input includes a drag input applied to the first image in a first direction, and the second input includes a drag input applied to the first image in a second direction opposite the first direction.

5. The mobile terminal as claimed in any one of claims 1 to 4, wherein the first input includes a drag input applied to the first image and the second input includes drag input extending from one edge of the touchscreen to another edge of the touchscreen.

6. The mobile terminal as claimed in any one of claims 1 to 5, wherein the controller is further configured to:
cause the touchscreen to display a first graphical object and a second graphical object corresponding to the IM on the first image when a drag input applied to the first image is received, and
wherein the first input selects the first graphical object and the second input selects the second graphical object,wherein the first graphical object and the second graphical object are sequentially displayed on the first image according to length of the drag input of the first input.

7. The mobile terminal as claimed in any one of claims 1 to 6, wherein the controller is configured to:
cause the touchscreen to display on the first image a number of the shared images shared through the chat window, and a number of images downloaded from among the shared images.

8. The mobile terminal as claimed in any one of claims 1 to 7, wherein the controller is configured to:
cause the touchscreen to display a plurality of images downloaded through the chat window; and
cause the touchscreen to display a second image on a basis of a time of sharing the second image when the second image is additionally downloaded through the chat window.

9. The mobile terminal as claimed in any one of claim 1 or 2, wherein the controller is further configured to:
cause the touchscreen to display graphical objects indicating sources respectively corresponding to the plurality of groups, and execute a source corresponding to a selected graphical object, when a third input is received while the displaying of the plurality of images according to the classified group.

10. The mobile terminal as claimed in any one of claims 1, 2 or 9, wherein the graphical objects are respectively displayed on folders classified into the plurality of groups.

11. The mobile terminal as claimed in any one of claims 1,2, 9 or 10, wherein the graphical objects are provided as a list in which the graphical objects respectively corresponding to the plurality of groups are arranged in a predetermined order,
wherein the predetermined order is determined in consideration of download frequency or access frequency.

12. The mobile terminal as claimed in any one of claims 1,2,9,10 or 11,
wherein the third input includes a drag input in a first direction, and the graphical objects are deleted when a drag input in a direction opposite to the first direction is received after the third input is received.

13. The mobile terminal as claimed in any one of claim 1 or 2, wherein, the controller is configured to:
classify images shared through an IM for respective chat windows, and cause the touchscreen to display the images, when a group corresponding to the IM is selected from the plurality of groups;
cause the touchscreen to display an object indicating download state information of the shared images along with the shared images: and
download at least one image which has not been downloaded from among the images shared through the first chat window when the object displayed on a first chat window is selected.

14. The mobile terminal as claimed in any one of claims 1 to 13, wherein the source is a download source and includes at least one of a message application, a social network service (SNS) application, a web browser, a screenshot application, or an external device linked to the mobile terminal through short-range communication.

15. A method for controlling a mobile terminal having a touchscreen and memory, the method comprising:
downloading and storing images in the memory;
displaying, on the touchscreen, a first image from among the stored images; and
displaying, on the touchscreen, a screen associated with a source of the first image in response to a first input received with regard to the first image, wherein the screen includes the first image and other screen information.
